# EUROPEAN PATENT SPECIFICATION

(11) **EP 2 583 992 B1**
(45) Date of publication and mention of the grant of the patent: **11.06.2014**
(21) Application number: 11185482.4
(22) Date of filing: 17.10.2011
(51) Int. Cl.: C08L 23/10, C08J 3/12, C09J 123/10, C08K 7/28, C09J 193/04

(54) **Hollow glass micro particles used as anti-blocking system in hot melts**
Hohlglas-Mikropartikel als Antiblockiersystem in Heißschmelzen
Microparticules de verre creuses utilisées comme système anti-blocage dans des émails thermofluides

(43) Date of publication of application: 24.04.2013
(73) Proprietor: H.B. Fuller Company, St. Paul, Minnesota 55164-0683 (US)
(72) Inventor: Serra, Joaquim, 4350 - 127 Porto (PT)
(74) Representative: Hansen, Norbert

(56) References cited:
- EP-A2- 0 115 307
- GB-A- 2 344 061
- US-A- 4 431 765
- US-A- 5 454 909
- "Product Information - 3M Scotchlite Glass Bubbles, K Series, S Series", , 1 December 2003 (2003-12-01), pages 1-8, XP55021302, Retrieved from the Internet: URL:http://multimedia.3m.com/mws/mediawebs erver?mwsId=SSSSSu7zK1fslxtUnxme4Y_9ev7qe1 7zHvTSevTSeSSSSSS--&fn=GlassBubbles KandS Series.pdf [retrieved on 2012-03-08]
- DATABASE WPI Week 200914 Thomson Scientific, London, GB; AN 2009-B45111 XP002671098, & JP 2009 001753 A (RICOH KK) 8 January 2009 (2009-01-08)

## Description

### Field of the invention

The present invention relates to hot melt compositions, and more specifically to anti-blocking agents for hot melt compositions. The present invention further relates to hot melt particulate units which are free flowing and have a substantially tack-free surface, and their manufacture.

### Background of the invention

Hot melt compositions or hot melts are thermoplastic materials which are solid at ambient temperature and are generally applied to a substrate while in the molten state. After the hot melts have been solidified again, they may exert different functions. For example, they can provide a solvent-free adhesive for bonding.

Depending on their composition, the packaging, transportation, storage, or further processing of hot melts may lead to problems in industry due to agglomeration of the hot melt being in the form of pellets, blocks or other particulate units. This agglomeration, for example, may disable a correct use of hot melts in customer processes, either because it is very difficult to remove the hot melts from the storage bag, or because it creates major issues in semi-automatic processes where pumping of hot melt granules such as prills or pellets is used to feed the melting tanks. Also in machines where pre-melters are used, agglomeration can be problematic since it may lead to situations of discontinuous feed of hot melt. These problems can occur, for example, with amorphous poly-α-olefin-(APAO)-based hot melts, which typically possess some residual or permanent tack at room temperature.

Currently, anti-blocking powders such as talc, wax, or silica are used in the discharge of hot melts to avoid agglomeration. However, these compounds tend to become completely absorbed over time by the hot melt, and, as a result, the residual tack reappears. Furthermore, some of the currently used anti-blocking agents such as silica dust are potentially harmful or can cause serious health damage, for example, lung or respiratory problems.

US 5,869,555 discloses a hot melt composition having a tack-free surface prior to melting. An anti-blocking coating based on cellulose acetate butyrate for pressure sensitive hot melt adhesives is described in US 6,083,630. US 4,645,537 discloses an aqueous release agent comprising aliphatic alcohols and aliphatic hydroxy dicarboxylic or tricarboxylic acids. A low tack adhesive layer comprising displaceable or fracturable microparticles is described in US 6,020,062.

There remains a need in the art for an anti-blocking agent which improves the handling of hot melts and prevents agglomeration permanently and reliably.

### Summary of the invention

It is an object of the present invention to provide an anti-blocking agent or additive which ensures that particulate units, such as granules as defined below, of a hot melt composition are not agglomerated during their packaging, transportation, storage, or further processing. Another object of the present invention is to provide an anti-blocking agent that is not absorbed over time by the hot melt, or which is not potentially harmful to health. It would also be desirable to provide an anti-blocking agent which is highly effective in preventing the agglomeration of hot melt granules over time. Furthermore, it would be desirable to provide an anti-blocking agent which allows easy de-agglomeration of some blocked hot melt particulate units, for example, when high pressure is applied to the hot melt during transportation or storage, or when the hot melt is transported or stored at elevated ambient temperatures, for example, at a temperature of more than 25°C. It would also be advantageous to provide an anti-blocking agent which does not undesirably change the characteristics of the hot melt composition after melting.

Furthermore, it is an object of the present invention to provide a hot melt composition comprising such an anti-blocking agent or additive. It would be desirable to provide a hot melt composition having a reduced tackiness while the other properties and the purity of the hot melt composition remains unaffected. It is also an object of the present invention to provide hot melt particulate units which are free flowing and/or have a substantially tack-free surface for extended periods of time.

The foregoing and other objects are solved by a hot melt composition in the form of particulate units, the particulate units having a surface which is at least partially coated by hollow glass micro particles.

According to another aspect of the present invention, the use of hollow glass micro particles as anti-blocking additives for hot melt compositions is provided.

According to still another aspect of the present invention, a method for preparing hot melt particulate units is provided, comprising the steps of
(a) providing particulate units of a hot melt composition, and
(a) contacting said particulate units with hollow glass micro particles, to at least partially cover the surface of the particulate units with hollow glass micro particles adhering to the surface.

According to still another aspect of the present invention, a method to prevent or reduce blocking of a hot melt composition is provided comprising contacting a hot melt composition in the form of particulate units with hollow glass micro particles.

According to still another aspect of the present invention, a use of the inventive hot melt composition as a hot melt pressure sensitive adhesive or hot melt adhesive is provided.

Advantageous embodiments of the present invention are defined in the corresponding sub-claims.

According to one embodiment the micro particles have an average particle size *d₅₀* from 1 to 200 µm, preferably from 5 to 150 µm, more preferably from 10 to 100 µm, and most preferably from 20 to 80 µm. According to another embodiment the micro particles have a density of less than 0.50 g/cm³, preferably less than 0.30 g/cm³, more preferably less than 0.20 g/cm³, and most preferably less than 0.15 g/cm³. According to still another embodiment the micro particles are present in an amount from 0.1 to 10 wt.-% based on total weight of the hot melt composition, preferably from 0.2 to 5.0 wt.-%, more preferably from 0.3 to 1.0 wt.-%, and most preferably from 0.5 to 0.7 wt.-%. According to still another embodiment the hollow glass microparticles are selected from silicon dioxide, quartz, soda-lime glass, borosilicate glass, sodium borosilicate glass, or soda-lime borosilicate glass, or any mixture thereof. According to one embodiment the hot melt composition comprises at least 10 wt.-% of at least one amorphous poly-α-olefin (APAO), based on the total weight of the hot melt composition, preferably from 10 to 90 wt.-%, more preferably from 25 to 75 wt.-%, and most preferably from 30 to 50 wt.-%. According to another embodiment the at least one amorphous poly-α-olefin is selected from homopolymers of propylene or copolymers of propylene with one or more α-olefin comonomer, preferably ethylene, 1-butene, 1-hexene, and 1-octene, preferably the at least one amorphous poly-α-olefin is selected from the group consisting of propylene homopolymer, propylene-ethylene copolymer, propylene-1-butene copolymer, and propylene-ethylene-1-butene terpolymer.

According to one embodiment the hot melt composition further comprises a tackifying resin, preferably in an amount from 5 to 75 wt.-% based on total weight of the hot melt composition, more preferably from 10 to 60 wt.-%, and most preferably from 15 to 50 wt.-%. According to another embodiment the hot melt composition comprises a plasticizer, preferably in an amount from 1 to 20 wt.-% based on the total weight of the hot melt composition, more preferably from 1 to 10 wt.-%, and most preferably from 1 to 7 wt.-%.

According to one embodiment the hot melt composition is a hot melt pressure sensitive adhesive or a hot melt adhesive.

According to one embodiment the particulate units include at least one of granules, blocks, pillows, elongated ropes or rods. According to another embodiment the particulate units are granules having a size from 0.1 to 20 mm, preferably from 1 to 10 mm, more preferably from 2 to 8 mm, and most preferably from 3 to 6 mm.

According to one embodiment the hot melt composition has a tack-free surface and/or is free flowing at ambient conditions.

According to one embodiment the particulate units are granules, wherein the granules of step (a) of the inventive method are prepared by a method comprising the steps of
(i) providing one or more hot melt components and blending the hot melt components to form a homogeneous hot melt composition,
(ii) forcing the homogeneous hot melt composition through a die having a series of voids in a circular pattern to form a series of homogeneous hot melt ribbons,
(iii) further forcing said homogeneous hot melt ribbons past rotating blades in parallel position to said die, and cutting the hot melt ribbons to form resultant granules,
(iv) solidifying the granules by use of a liquid cooling medium being circulated past said die and rotating blades on the side where the hot melt ribbons emerge, and
(v) transporting the hot melt granules to a drying area and removing liquid by blowing the obtained granules.

### Detailed description of the invention

According to the present invention a hot melt composition in the form of particulate units is provided which is at least partially covered by a layer of hollow glass micro particles. According to a further aspect of the present invention, hot melt particulate units are provided comprising a hot melt composition, wherein the surface of the hot melt particulate units is at least partially covered with hollow glass micro particles. In the following, the hollow glass micro particles that are used as anti-blocking additive and the hot melt composition will be described in more detail as well as hot melt particulate units comprising said anti-blocking additive.

### The hollow glass micro particles

According to the present invention hollow glass micro particles are used as an anti-blocking additive for a hot melt composition. According to another aspect of the present invention, a method to prevent or reduce blocking of a hot melt composition is provided, comprising contacting the hot melt with hollow glass micro particles to at least partially cover the surface of the hot melt composition with the hollow glass micro particles.

The term "micro particle" as used in the context of the present invention refers to a physical form or shape of the anti-blocking additive having a size, in the longest dimension, in the micrometer range, e.g., a particle size from 1 to 200 µm, and includes, for example, a pellet, granule, chip, powder, flake, sphere, or any other form or shape suitable for use as an anti-blocking additive. In preferred embodiments, the hollow glass micro particles are substantially spherical having an average diameter in the above mentioned size ranges.

The inventor surprisingly found that hollow glass micro particles effectively prevent the agglomeration of hot melt compositions, e.g. hot melt granules or other hot melt particulate units, over extended periods of time. Furthermore, the addition of hollow glass micro particles allows an easy de-agglomeration of potentially blocked hot melt particulate units. It was also found that hollow glass micro particles are particularly useful as anti-blocking agents in APAO-based hot melts which typically possess some residual or permanent tack, particularly at elevated ambient temperatures. In particular, the inventors found that the anti-blocking properties of hollow glass micro particles are not adversely affected when the hot melt is exposed to higher ambient temperatures (e.g. between 25 and 40°C), for example, during storage or transportation. This makes the inventive anti-blocking agent very reliable.

Without being bound to a specific theory, it is believed that the effectiveness of the hollow glass micro particles as an anti-blocking agent is a result of the chemical and physical characteristics of the particles, supported by the fact that hollow glass micro particles are not completely absorbed over time during storage by the hot melt composition, as with many other anti-blocking additives. In this regard, it is noted that conventional anti-tack coated hot melt compositions during the storage at high room temperatures (25 - 40 °C) tend to "absorb" the anti-tack powder, thus deteriorating the anti-tack effectiveness. It was observed, that this does not happen with the rather large sized (compared to, e.g. talc powder and other standard anti-agglomeration powders) hollow glass micro particles of comparably low density.

Furthermore, some of the conventional anti-blocking agents such as silica create inhalable dusts that are potentially harmful or can cause serious health damage, for example, lung or respiratory problems. Hollow glass micro particles are less inhalable and dusts of the micro particles, which may be formed during their handling, tend to disappear much faster due to the quicker deposition of the particles. This reduces health risks and expenses for filters and air cleaning equipment. Consequently, hollow glass micro spheres provide a favorable, environmentally friendly and safe alternative to silica as an anti-blocking agent for hot melt adhesive granules or other particulate units of hot melt adhesives.

The hollow glass micro particles may be in the form of spheres or bubbles, may have a more elliptic or rod-like shape, or may be irregularly shaped. According to a preferred embodiment, the hollow glass micro particles are in the form of spheres.

According to one embodiment of the present invention the hollow glass micro particles have an average particle size *d₅₀* from 1 to 200 µm. Preferably, the hollow glass micro particles have an average particle size *d₅₀* from 5 to 150 µm, more preferably from 10 to 100 µm, and most preferably from 20 to 80 µm.

Throughout the present document, the term "particle size" is described by its distribution of particle sizes. The value *dₓ* represents the diameter relative to which *x* % by weight of the particles have diameters less than *dₓ*. The *d*₅₀ value is thus the weight median particle size, i.e. 50 wt.-% of all particles are bigger or smaller than this particle size. For the purpose of the present invention the particle size is specified as weight median particle size *d*₅₀ unless indicated otherwise. To determine the weight median particle size *d*₅₀ value for particles having a *d*₅₀ value between 0.4 and 2 µm, routine equipment such as a Sedigraph 5120 device of Micromeritics, USA, may be used.

The hollow glass micro particles may have a density of less than 0.50 g/cm³, preferably less than 0.30 g/cm³, more preferably less than 0.20 g/cm³, and most preferably less than 0.15 g/cm³. The inventors surprisingly found that hollow glass micro spheres having a density of less than 0.50 g/cm³ are especially suitable as an anti-blocking additive, and typically adhere particularly well to the surface of hot melt compositions.

According to one embodiment of the present invention, the hollow glass micro particles have an average particle size *d₅₀* from 1 to 200 µm and a density of less than 0.50 g/cm³. According to another embodiment of the present invention, the hollow glass micro particles are hollow glass spheres having an average particle size *d₅₀* from 1 to 200 µm and a density of less than 0.50 g/cm³.

The glass micro particles can be made of any glass material. According to one embodiment of the present invention, the hollow glass micro particles are selected from silicon dioxide, quartz, soda-lime glass, borosilicate glass, sodium borosilicate glass, or soda-lime borosilicate glass, or any mixtures thereof.

The hollow glass micro particles may be present in an amount from 0.1 to 10 wt.-%, based on the total weight of the hot melt composition. Preferably, the hollow glass micro particles are present in an amount from 0.2 to 5.0 wt.-%, based on total weight of the hot melt composition, more preferably from 0.3 to 1.0 wt.-%, and most preferably from 0.5 to 0.7 wt.-%.

According to the present invention, the hot melt composition is at least partially covered with hollow glass micro particles, e.g., by a layer of the particles on the surface of the hot melt composition or particulate units, respectively. For the purpose of the present invention, the term "at least partially covered" means that at least 10%, preferably more than 25%, more preferably more than 50%, and most preferably more than 75% or more than 90% of the surface of the particulate units of the hot melt composition are covered by a layer of hollow glass micro particles. According to one embodiment, the hot melt composition particulate units are substantially completely covered by at least one surface layer of hollow glass micro particles.

### The hot melt composition

For the purpose of the present invention, the term "hot melt" or "hot melt composition" refers to a solvent free product which is more or less solid at room temperature, i.e. at a temperature between 20 and 25°C. When heated the hot melt becomes tacky and can be applied, for example, to a substrate to provide an adhesive surface.

The present invention is not specifically limited with respect to the polymer being used. Rather, any polymer that in principle can be used in hot melt compositions is suitable according to the present invention. This refers to thermoplastic polymers selected, e.g., from ethylene and propylene homo- and co-polymers and mixtures thereof. Other suitable polymers for hot melt compositions are polyamides and polyesters, polyurethanes, or styrene block copoylmers. Also useful are amorphous poly-α-olefins (APAO) such as atactic propylene, and propylene copolymers with ethylene, butene, hexene, and octene.

According to one embodiment of the present invention, the hot melt composition is an amorphous poly-α-olefin (APAO) based hot melt composition. The hot melt composition may comprise at least 10 wt.-% of at least one amorphous poly-α-olefin (APAO), based on the total weight of the hot melt composition. According to one embodiment of the present invention, the hot melt composition comprises at least 25 wt.-%, preferably at least 50 wt.-%, more preferably at least 75 wt.-%, and most preferably at least 90 wt.-% of a APAO. Preferably the hot melt composition comprises from 10 to 90 wt.-%, more preferably from 25 to 75 wt.-%, and most preferably from 30 to 50 wt.-% of a APAO, based on the total weight of the hot melt composition.

Poly-α-olefins (APAO) may consist of several different categories of atactic, low molecular weight, low melt viscosity, and substantially amorphous propylene based polymers. These polymers can be either homopolymers of propylene or copolymers of propylene with one or more α-olefin comonomer, such as, for example, ethylene, 1-butene, 1-hexene, or 1-octene. The average weight molecular weight of the APAO polymers in the scope of the present invention may be in the range of from 4000 to 150000 g/mol, preferably from 10000 to 100000 g/mol. The said polymers may have a softening point between about 80 and 170°C and a glass transition temperature from about -5 to -40°C. APAO polymers are usually predominantly amorphous without a well-defined melting point. However, APAO polymers may exhibit some degree of crystallinity. For example, there are some grades of commercial APAO products having a low degree of crystallinity.

The APAO polymers may be functionalized, e.g., by contacting the polymer with at least one functional group, e.g., an unsaturated monomer. Examples for suitable unsaturated monomers are carboxylic acids, dicarboxylic acids, organic esters, organic anhydrides, organic alcohols, organic acid halides, organic peroxides, amides, or imides.

According to one embodiment the at least one amorphous poly-α-olefin is selected from homopolymers of propylene or copolymers of propylene with one or more α-olefin comonomer. Preferably the α-olefin comonomer is selected from the group consisting of ethylene, 1-butene, 1-hexene, and 1-octene. Preferably the at least one amorphous poly-α-olefin is selected from the group consisting of propylene homopolymer, propylene-ethylene copolymer, propylene-1-butene copolymer, and propylene-ethylene-1-butene terpolymer. However, any other APAO polymer falling in the range of physical properties described above can also be used.

APAO polymers that may be used in the hot melt of the present invention are, for example, available from REXtac LLC, Odessa, Texas, USA, under the trade name of Rextac^{™} such as RT-2280 and RT-2315 and RT-2585.

Other polymers that may be useful in the hot melt composition of the present invention include metallocene catalyzed polymers including homopolymers and interpolymers of ethylene, propylene, or butene including, e.g., substantially linear interpolymers of ethylene with at least one C₂ to C₂₀-α-olefin, further characterized by each said interpolymer having a polydispersity less than about 2.5 including such polymers as Exact^{™}5008, an ethylene-butene copolymer, Exxpol SLP-0394^{™}, and ethylene-propylene copolymer, Exact^{™}3031, an ethylene-hexene copolymer, all available from Dow Chemical Co. in Midland, USA.

Other polymers that may be useful in the hot melt composition of the present invention are homopolymers, copolymers and terpolymers of ethylene. Preferred are copolymers of ethylene with one or more polar monomers, such as vinyl acetate or other vinyl esters of monocarboxylic acids, or acrylic or methacrylic acid or their esters with methanol, ethanol or other alcohols.

According to one embodiment of the present invention, the hot melt composition comprises a polymer selected from the group consisting of ethylene vinyl acetate, ethylene methyl acrylate, ethylene n-butyl acrylate, ethylene acrylic acid, ethylene methacrylate, ethylene 2-ethylhexylacrylate, ethylene octane, ethylene butene and mixtures and blends thereof. Said polymers may be present in an amount from 0 to 20 wt.-%, preferably from 1 to 15 wt.-%, from 2 to 12 wt.-%, or from 5 to 10 wt.-%, based on the total weight of the hot melt composition.

The hot melt composition of the present invention may be a hot melt pressure sensitive adhesive or a hot melt adhesive.

The hot melt composition may be in any form suitable for its use, including any particulate units, irrespective of size. For the purpose of the present invention the term "particulate units" comprises hot melt compositions in the form of granules, blocks, pillows, elongated ropes or rods, or any other known form of hot melts, which may also be at least partially coated with hollow glass micro particles in accordance with the invention. The elongated ropes or rods can be of any length, and, e.g., can be wound onto a reel or spoon and applied from there. Particulate units such as blocks, pillows, elongated ropes or rods may have a size, in the longest dimension, in the range of centimeters, for example up to 15 cm or up to 20 cm. For example, the elongated ropes or rods may have a length between 1 and 10 cm, preferably between 2 and 8 cm or 3 and 7 cm, and a diameter between 0.5 and 3 cm, preferably between 1 and 2 cm. In certain embodiments, the hot melt composition are in the form of granules, the term "granules" including any smaller sized particulate units, such as particles, prills, chips, flakes, spheres, beads, slugs, e.g. sausage shaped slugs, or pellets.

According to one embodiment of the present invention, the particulate units are selected from at least one of blocks, pillows, elongated ropes or rods. According to another embodiment of the present invention, the particulate units are granules, the granules being preferably selected from at least one of particles, prills, chips, flakes, spheres, beads, slugs, or pellets. Such granules may have an average size from 0.1 to 20 mm, more preferably from 1 to 10 mm, still more preferably from 2 to 8 mm, and most preferably from 3 to 6 mm.

According to one preferred embodiment of the present invention, the hot melt composition granules are in form of prills. A "prill" in the meaning of the present invention refers to a spherical bead. Preferably, the prills have an average size from 0.1 to 20 mm, more preferably from 1 to 10 mm, still more preferably from 2 to 8 mm, and most preferably from 3 to 6 mm.

According to one embodiment of the present invention the hot melt composition which is at least partially covered with hollow glass particles has a tack-free surface and/or is free-flowing, preferably for extended periods of time, such as a month, 3 months, 6 months, a year, or more than a year. The hot melt composition which is at least partially covered with hollow glass particles may have a tack-free surface and/or may be free-flowing at ambient conditions or room temperature, i.e. at temperatures from 20 to 25°C, and/or at higher ambient temperatures, i.e. at temperatures from 25 to 40°C. Preferably, the hot melt composition which is at least partially covered with hollow glass particles may have a tack-free surface and/or may be free-flowing at temperatures from 20 to 40°C. The term "free-flowing" as used in the present invention means that particulate units, preferably granules, of the hot melt composition are able to move freely and without any difficulty and/or any agglomeration.

### Further, optional components

The hot melt composition may comprise further, optional, components such as tackifying agents, plasticizers, stabilizers, antioxidants, pigments, dyes, ultraviolet light absorbers, anti-slip agents and combinations thereof.

According to one optional embodiment, the hot melt composition further comprises a tackifying agent, preferably in an amount from 5 to 75 wt.-% based on total weight of the hot melt composition, more preferably in an amount from 10 to 60 wt.-%, and most preferably in an amount from 15 to 50 wt.-%.

Useful tackifying agents include, e.g., natural and modified rosins such as gum rosin, wood rosin, tall oil rosin, distilled rosin, hydrogenated rosin, dimerized rosin and polymerized rosin; rosin esters such as glycerol, and pentaerythritol esters of natural and modified rosins; phenolic modified terpene, α-methyl styrene resins and hydrogenated derivatives thereof; aliphatic petroleum hydrocarbon resins having a Ball and Ring softening point of from about 70°C to 135°C; aromatic petroleum hydrocarbon resins, and mixed aromatic and aliphatic paraffin hydrocarbon resins and the hydrogenated derivatives thereof; aromatic modified alicyclic petroleum hydrocarbon resins and the hydrogenated derivatives thereof; alicyclic petroleum hydrocarbon resins and the hydrogenated derivatives thereof; low molecular weight polylactic acid; and combinations thereof. Preferably, aliphatic hydrocarbon resins or rosin esters of pentaerythritol are included as tackifying agents for APAO based hot melt compositions.

According to another, optional, embodiment of the present invention, the hot melt composition comprises a plasticizer, preferably in an amount from 1 to 20 wt.-% based on the total weight of the hot melt composition, more preferably in an amount from 1 to 10 wt.-%, and most preferably in an amount from 1 to7 wt.-%.

Suitable plasticizers may include mineral based oils and petroleum based oils, liquid resins, liquid elastomers, polybutene, polyisobutylene, functionalized oils such as glycerol trihydroxyoleate and other fatty oils and mixtures thereof. A "plasticizer" in the meaning of the present invention is a typically organic composition that can be added to thermoplastics, rubbers and other resins to improve extrudability, flexibility, workability and stretchability in the finished adhesive. Any material which flows at ambient temperatures and is compatible with the block copolymer may be useful. The most commonly used plasticizers are oils which are primarily hydrocarbon oils that are low in aromatic content and are paraffinic or naphthenic in character. The oils are preferably low in volatility, transparent and have as little color and odor as possible. Furthermore, olefin oligomers, low molecular weight polymers, vegetable oils and their derivatives and similar plasticizing oils may be used as plasticizers.

Useful antioxidants are, e.g., high molecular weight hindered phenols and multifunctional phenols. Useful stabilizers are, e.g., phosphites, such as tris-(p-nonylphenyl)-phosphite (TNPP) and bis(2,4-di-tert-butylphenyl)4,4'-diphenylenediphosphonite and di-stearyl-3,3'-thiodipropionate (DSTDP). Useful antioxidants are, e.g., commercially available under trade designation IRGANOX, including IRGANOX 1010, from Ciba (Terrytown, N.Y.), and under the trade designation BNX, including BXN 1010, from Mayzo, Inc. (Norcross, Ga.). Useful anti-slip agents are, e.g., silicone oils. Examples thereof are commercially available, e.g., under the trade designation Tegiloxan and available from Goldschmidt Industrial Specialties.

### Preparation of hot melt particulate units and their use

The hot melt particulate units of the present invention comprise a hot melt composition, wherein the surface of the particulate units is at least partially covered with hollow glass micro particles, e.g. at least one layer of hollow glass micro particles. The inventive hot melt particulate units, particularly granules, may be substantially tack-free and/or free flowing. The term "free-flowing" as used in the present invention means that the particulate units_are able to move freely and without any difficulty and/or any agglomeration.

According to one embodiment of the present invention, a method for preparing hot melt particulate units comprises the steps of (a) providing particulate units of a hot melt composition, and (b) contacting the hot melt particulate units with hollow glass micro particles, to at least partially cover the surface of the particulate units with hollow glass micro particles adhering to the surface.

The inventive method allows the preparation of tack-free and/or free flowing hot melt particulate units.

Hot melt compositions granules, particularly prills, may be particularly suitable for use in vacuum feeders due to their small size and weight. However, due to the larger surface of prills compared to the larger pellets, prills may have a higher tendency to agglomerate. Thus, the present invention is specifically advantageous with small sized granules such as prills, although it equally works with pellets, flakes, blocks or any other form of particulate units of the inventive hot melt composition.

According to one embodiment, the hot melt particulate units of the present invention comprise a hot melt composition in the form of granules, wherein the surface of the granules is at least partially covered with hollow glass micro particles, e.g. at least one layer of hollow glass micro particles. The inventive hot melt granules may be substantially tack-free and/or free flowing.

According to one preferred embodiment of the present invention, a method for preparing hot melt granules, preferably prills, is provided comprising the steps of (a) providing granules of a hot melt composition, and (b) contacting the hot melt granules with hollow glass micro particles, to at least partially cover the surface of the granules with hollow glass micro particles adhering to the surface. Preferably, the hot melt granules have a substantially dry surface before contacting with hollow glass micro particles.

The inventive method allows the preparation of tack-free and/or free flowing hot melt granules, preferably prills.

The production of the hot melt granules, specifically prills, may require multiple passes through a co-rotating twin screw extruder to homogenize the hot melt composition, followed by an extrusion through a pelletizing system, followed by a drying process to extract all the residual water from the granules, followed by the calibration of the granules size. A suitable pelletizing system is, for example, the underwater pelletizer provided by Gala Industries Inc. (U.S.A.). However, any other system that is suitable to produce granules from hot melt compositions can also be used.

According to one embodiment, the granules of a hot melt composition provided in method step (a) are prepared by a method comprising the steps of
(i) providing one or more hot melt components and blending the hot melt components to form a homogeneous hot melt compositions,
(ii) forcing the homogeneous hot melt composition through a die having a series of voids in a circular pattern to form a series of homogeneous hot melt ribbons,
(iii) further forcing said homogeneous hot melt ribbons past rotating blades in parallel position to said die, and cutting the hot melt ribbons to form resultant granules,
(iv) solidifying the granules by use of a liquid cooling medium being circulated past said die and rotating blades on the side where the hot melt ribbons emerge, and
(v) transporting the hot melt granules to a drying area and removing liquid by blowing the obtained granules.

In a preferred embodiment, the granules produced from this method are prills.

Hot melt compositions and hollow glass micro particles that are suitable for preparing the inventive hot melt granules are described above. Optionally, the hot melt particulate units may comprise additional components such as described above.

The contacting of the particulate units of a hot melt composition with hollow glass micro particles according to the method step (b) may be carried out with any conventional method and equipment which is suitable for the deposition of the glass micro particles on said particulate units.

For example, the hollow glass micro particles may be simply powdered onto the particulate units, or the particulate units may be mixed in the respective amounts with the hollow glass micro particles, for example in a mixing device such as a drum mixer, paddle mixer, tumbling mixer, or screw mixer.

Another possibility to contact the particulate units with the hollow glass micro particles is to discharge the particulate units into a container, e.g., a storage bag, containing the hollow glass micro particles, and optionally, mixing the particulate units and the hollow glass micro particles in the container by movement, e.g. shaking, rolling etc.

According to one embodiment the hot melt particulate units are contacted with the hollow glass micro particles by mixing the particulate units with the hollow glass micro particles in a container, e.g. in a storage bag.

The contacting of a hot melt composition with hollow glass micro particles prevents or reduces blocking of a hot melt composition. Thus, according to a further aspect the present invention is directed to a method to prevent or reduce blocking of a hot melt composition comprising contacting a hot melt composition in the form of particulate units with hollow glass micro particles. Said method may be carried out with freshly produced hot melt particulate units which are dried and cooled down to room temperature.

The inventive hot melt can be used as a hot melt pressure sensitive adhesive or hot melt adhesive, preferably in the production of hygiene articles, care articles, paper, packaging, furniture, textiles, footwear, in woodworking or construction industries. According to a preferred embodiment, the inventive hot melt composition is used as a hot melt pressure sensitive adhesive or hot melt adhesive in the production of furniture or in woodworking.

According to another embodiment, the inventive hot melt particulate units, preferably granules, are used as a hot melt pressure sensitive adhesive or hot melt adhesive, preferably in the production of hygiene articles, care articles, paper, packaging, furniture, textiles, footwear, in woodworking or construction industries. According to a preferred embodiment, the inventive hot melt particulate units, preferably granules, are used as a hot melt pressure sensitive adhesive or hot melt adhesive in the production of furniture or in woodworking.

The invention will now be described by way of the following examples. All parts, ratios, percents and amounts stated are by weight unless otherwise specified.

### Examples

### Anti-blocking additives

**Table 1: Anti-blocking additives**

| **Additive** | **type of product** | **specific characteristics** |
|---|---|---|
| A (comparative) | talc | average particle size *d₅₀*: 5.0 µm |
| B (comparative) | talc | average particle size *d₅₀*: 17.6 µm |
| C (comparative) | fumed silica | -- |
| D (inventive) | hollow glass microspheres | average particle size *d₅₀*: 65 µm density: 0.10 - 0.14 g/cm³ |

### Example 1 - laboratory experiments

Prills having a size of 3 to 5 mm of an APAO based hot melt composition (Rakoll SK PO 5430, H.B. Fuller Europe GmbH, Switzerland) were mixed with an additive of table 1 inside a plastic bag. The amounts of the hot melt and additives used are given in Table 2 below.

**Table 2: Amounts of hot melt and additives used in example 1**

| Amount of hot melt (g) | Additive | Amount of additive (g) |
|---|---|---|
| 300 | A (comparative) | 1 |
| 300 | B (comparative) | 1 |
| 300 | C (comparative) | 1 |
| 300 | D (inventive) | 1 |

### Agglomeration test

The agglomeration tendency of the prepared hot melt prills was tested as follows: 250 g of the hot melt prills were weighed into a 600 ml glass beaker (80 x 150 mm) and a cylindrical weight of 1 kg having a diameter at the base of 75 mm was placed over the hot melt sample in the beaker. The set was placed into a ventilated oven for 3 days at a temperature of 40°C. The sample was analyzed visually immediately after removing the set from the oven, and after allowing the set to stabilize at room temperature (about 23°C) for 3 days. The results are compiled in Table 3 below.

**Table 3: Agglomeration tendency of tested hot melt samples with different additives.**

| Additive used | Results | | Comments |
|---|---|---|---|
| | at 40°C | at 23°C | |
| no additive | +(+) | + | --- |
| A (comparative) | ++(+) | ++ | Almost no additive on the surface of the hot melt |
| B (comparative) | +++ | ++ | Almost no additive on the surface of the hot melt |
| C (comparative) | ++++ | +++++ | Additive is visible on the hot melt |
| D (inventive) | ++++ | +++++ | Additive is visible on the hot melt |

| | | | |
|---|---|---|---|
| Legend: + the hot melt prills do not flow out of the beaker, even forcing them manually ++ the hot melt prills flow with extreme difficulty (almost no flow); forcing manually, the prills are released +++ the hot melt prills flow when the beaker is shaken ++++ the hot melt prills flow without shaking the beaker, but still with some agglomeration +++++ the hot melt prills flow out of the beaker without any difficulty and without any agglomeration | | | |

### Example 2 - industrial experiments

Prills having a size of 3 to 5 mm of a APAO based hot melt composition (Rakoll SK PO 5433, H.B. Fuller Europe GmbH, Switzerland) were contacted with 0.5 to 0.7 wt.-%, based on the total amount of the hot melt composition, of an additive of table 1 by powdering the hot melt prills with the anti-blocking additive by means of a mixing device such as a drum mixer, paddle mixer, tumbling mixer, or screw mixer.

The obtained at least partially coated hot melt prills were discharged into storage bags. In all cases, the quantity of additive was chosen such that the same visual coating was obtained as in the laboratory experiments of example 1.

The amounts of the hot melt are given in Table 4 below.

**Table 4: Amounts of hot melt produced industrially and additives used in example 2.**

| Sample | Amount of hot melt (kg) | Additive | Comments |
|---|---|---|---|
| 1 | 800 | D (inventive) | discharged to 700 kg bag |
| 2 | 700 | D (inventive) | discharged to 700 kg bag |
| 3 | 700 | D (inventive) | discharged to 700 kg bag slightly more additive than in sample 2 |

### Agglomeration test

The agglomeration tendency of the prepared hot melt samples was tested by storing the bags with the samples for 1, 3 and 6 months, and analyzing the prills visually. The following results were obtained:

### Sample 1:

After 1 month at room temperature, the hot melt prills were not agglomerated and the additive was visible on the surface of the hot melt prills.
After 6 months at room temperature, the hot melt prills were agglomerated, but the prills were easily releasable. The additive was not visible on the surface of the hot melt prills. However, the quantity was sufficient to promote the de-agglomeration of the hot melt prills.

### Sample 2:

After 1 month at room temperature, the hot melt prills were slightly agglomerated and the additive was visible on the surface of the hot melt prills. The prills were easily releasable.
After 3 months at room temperature, the hot melt prills were very slightly agglomerated, but the prills were easily releasable. The additive was visible on the surface of the hot melt prills.

### Sample 3:

After 1 month at room temperature, the hot melt prills were not agglomerated and the additive was visible on the surface of the hot melt prills.
After 3 months at room temperature, the hot melt prills were very slightly agglomerated, but the prills were easily releasable. The additive was visible on the surface of the hot melt prills.

### Additional comments:

In all situations, the prills comprising additive D (hollow glass microspheres) were easily releasable, even when some agglomeration was visible. This means that the prills are not glued together as it happens, for example, with talc. Furthermore, the hollow glass micro spheres virtually look like silica regarding the formation of clouds of dust but due to the bigger particle size of the glass micro spheres, the powder is less inhalable and the cloud tends to disappear much faster due to the quicker deposition of the particles.

### Example 3 - films of the inventive hot melt granules

The hot melt prills produced with the additive D (hollow glass microspheres) were molten at a temperature of 190°C. The molten hot melt was manually spread on a siliconized paper to form films having a thickness of about100 µm by means of a metal applicator with a gap size of 50 µm. The obtained films were smooth and without any visible grits or spots.

### Summary of the examples

Talc (additives A and B) is easily absorbed by the hot melt over time, with the problem being more visible with high temperature (40°C). The prills show heavy agglomeration, with almost no flowability. A higher talc particle size (additive B) slightly improves the anti-blocking behavior but does not solve this problem. Agglomeration and blocking is still observed.

Silica (additive C) shows good anti-blocking properties. However, handling of this type of product leads to the formation of dust clouds, which are harmful and involve health problems due to the small size of the silica particles.

The hollow glass micro spheres (inventive additive D) show excellent anti-blocking properties even when some absorption of the microspheres or some agglomeration of the prills happens. Adhesion on the granules is good. The prills are easily releasable and the anti-blocking effect lasts for several months. Since the hollow micro spheres do not have the health problems as associated with the use of silica, the use of hollow glass micro spheres provides a favorable, safe and environmentally friendly alternative to silica as an anti-blocking agent for hot melt adhesive granules.

## Claims

1. A hot melt composition in the form of particulate units, the particulate units having a surface which is at least partially covered by hollow glass micro particles.

2. The hot melt composition in the form of particulate units of claim 1, wherein the micro particles have an average particle size *d₅₀* from 1 to 200 µm, preferably from 5 to 150 µm, more preferably from 10 to 100 µm, and most preferably from 20 to 80 µm.

3. The hot melt composition in the form of particulate units of claim 1 or 2, wherein the micro particles have a density of less than 0.50 g/cm³, preferably less than 0.30 g/cm³, more preferably less than 0.20 g/cm³, and most preferably less than 0.15 g/cm³.

4. The hot melt composition in the form of particulate units of any of the preceding claims, wherein the micro particles are present in an amount from 0.1 to 10 wt.-% based on total weight of the hot melt composition, preferably from 0.2 to 5.0 wt.-%, more preferably from 0.3 to 1.0 wt.-%, and most preferably from 0.5 to 0.7 wt.-%.

5. The hot melt composition in the form of particulate units of any of the preceding claims, wherein the hollow glass microparticles are selected from silicon dioxide, quartz, soda-lime glass, borosilicate glass, sodium borosilicate glass, or soda-lime borosilicate glass, or any mixture thereof.

6. The hot melt composition in the form of particulate units of any of the preceding claims, wherein the hot melt composition comprises at least 10 wt.-% of at least one amorphous poly-α-olefin (APAO), based on the total weight of the hot melt composition, preferably from 10 to 90 wt.-%, more preferably from 25 to 75 wt.-%, and most preferably from 30 to 50 wt.-%.

7. The hot melt composition in the form of particulate units of claim 6, wherein the at least one amorphous poly-α-olefin is selected from homopolymers of propylene or copolymers of propylene with one or more α-olefin comonomer, preferably ethylene, 1-butene, 1-hexene, and 1-octene, preferably the at least one amorphous poly-α-olefin is selected from the group consisting of propylene homopolymer, propylene-ethylene copolymer, propylene-1-butene copolymer, and propylene-ethylene-1-butene terpolymer.

8. The hot melt composition in the form of particulate units of any of the preceding claims, wherein the hot melt composition further comprises a tackifying resin, preferably in an amount from 5 to 75 wt.-% based on total weight of the hot melt composition, more preferably from 10 to 60 wt.-%, and most preferably from 15 to 50 wt.-%.

9. The hot melt composition in the form of particulate units of any of the preceding claims, wherein the hot melt composition comprises a plasticizer, preferably in an amount from 1 to 20 wt.-% based on the total weight of the hot melt composition, more preferably from 1 to 10 wt.-%, and most preferably from 1 to 7 wt.-%.

10. The hot melt composition in the form of particulate units of any of the preceding claims, wherein the hot melt composition is a hot melt pressure sensitive adhesive or a hot melt adhesive.

11. The hot melt composition in the form of particulate units of any of the preceding claims, wherein the particulate units include at least one of granules, blocks, pillows, elongated ropes or rods.

12. The hot melt composition in the form of particulate units of any of the preceding claims, wherein the particulate units are granules having a size from 0.1 to 20 mm, preferably from 1 to 10 mm, more preferably from 2 to 8 mm, and most preferably from 3 to 6 mm.

13. Use of hollow glass micro particles as anti-blocking additive for a hot melt composition in the form of particulate units.

14. A method for preparing particulate units of hot melt, comprising the steps of
(a) providing particulate units of a hot melt composition, and
(b) contacting the particulate units with hollow glass micro particles,
to at least partially cover the surface of the particulate units with hollow glass micro particles adhering to the surface.

15. The method of claim 15, wherein the particulate units are granules, the granules of step (a) being prepared by a method comprising the steps of
(i) providing one or more hot melt components and blending the hot melt components to form a homogeneous hot melt composition,
(ii) forcing the homogeneous hot melt composition through a die having a series of voids in a circular pattern to form a series of homogeneous hot melt ribbons,
(iii) further forcing said homogeneous hot melt ribbons past rotating blades in parallel position to said die, and cutting the hot melt ribbons to form resultant granules,
(iv) solidifying the granules by use of a liquid cooling medium being circulated past said die and rotating blades on the side where the hot melt ribbons emerge, and
(v) transporting the hot melt granules to a drying area and removing liquid by blowing the obtained granules.

16. A method to prevent or reduce blocking of a hot melt composition in the form of particulate units comprising contacting a hot melt composition in the form of particulate units with hollow glass micro particles.

## Patentansprüche

1. Eine Schmelzkleberzusammensetzung in Form von partikelförmigen Einheiten, wobei die partikelförmigen Einheiten eine Oberfläche aufweisen, die mindestens teilweise von hohlen Glasmikropartikeln bedeckt ist.

2. Die Schmelzkleberzusammensetzung in Form von partikelförmigen Einheiten gemäß Anspruch 1, wobei die Mikropartikel eine mittlere Teilchengröße d₅₀ von 1 bis 200 µm aufweisen, bevorzugt von 5 bis 150 µm, mehr bevorzugt von 10 bis 100 µm, und am meisten bevorzugt von 20 bis 80 µm.

3. Die Schmelzkleberzusammensetzung in Form von partikelförmigen Einheiten gemäß Anspruch 1 oder 2, wobei die Mikropartikel eine Dichte von weniger als 0.50 g/cm³ aufweisen, bevorzugt weniger als 0.30 g/cm³, mehr bevorzugt weniger als 0.20 g/cm³, und am meisten bevorzugt weniger als 0.15 g/cm³.

4. Die Schmelzkleberzusammensetzung in Form von partikelförmigen Einheiten gemäß einem der vorherigen Ansprüche, wobei die Mikropartikel in einer Menge von 0.1 bis 10 Gew.-% vorhanden sind, bezogen auf das Gesamtgewicht der Schmelzkleberzusammensetzung , bevorzugt von 0.2 bis 5.0 Gew.-%, mehr bevorzugt von 0.3 bis 1.0 Gew.-%, und am meisten bevorzugt von 0.5 bis 0.7 Gew.-%.

5. Die Schmelzkleberzusammensetzung in Form von partikelförmigen Einheiten gemäß einem der vorherigen Ansprüche, wobei die hohlen Glasmikropartikel ausgewählt sind aus Siliziumdioxid, Quartz, Kalknatronglas, Borosilikatglas, Natriumborosilikatglas oder Kalknatronborosilikatglas oder einer Mischung davon.

6. Die Schmelzkleberzusammensetzung in Form von partikelförmigen Einheiten gemäß einem der vorherigen Ansprüche, wobei die Schmelzkleberzusammensetzung mindestens 10 Gew.-% mindestens eines amorphen Poly-α-olefins (APAO) umfasst, bezogen auf das Gesamtgewicht der Schmelzkleberzusammensetzung, bevorzugt von 10 bis 90 Gew.-%, mehr bevorzugt von 25 bis 75 Gew.-%, und am meisten bevorzugt von 30 bis 50 Gew.-%.

7. Die Schmelzkleberzusammensetzung in Form von partikelförmigen Einheiten gemäß Anspruch 6, wobei das mindestens eine amorphe Poly-α-olefin ausgewählt ist aus Homopolymeren von Propylen oder Copolymeren von Propylen mit einem oder mehreren α-Olefin-Comonomeren, bevorzugt Ethylen, 1-Buten, 1-Hexen, und 1-Octene, bevorzugt ist das mindestens eine amorphe Poly-α-olefin ausgewählt aus der Gruppe bestehend aus Propylen-Homopolymer, Propylen-Ethylen-Copolymer, Propylene-1-Buten-Copolymer und Propylen-Ethylen-1-Buten-Terpolymer.

8. Die Schmelzkleberzusammensetzung in Form von partikelförmigen Einheiten gemäß einem der vorherigen Ansprüche, wobei die Schmelzkleberzusammensetzung zusätzlich ein klebrigmachendes Harz umfasst, bevorzugt in einer Menge von 5 bis 75 Gew.-%, bezogen auf das Gesamtgewicht der Schmelzkleberzusammensetzung, mehr bevorzugt von 10 bis 60 Gew.-%, und am meisten bevorzugt von 15 bis 50 Gew.-%.

9. Die Schmelzkleberzusammensetzung in Form von partikelförmigen Einheiten gemäß einem der vorherigen Ansprüche, wobei die Schmelzkleberzusammensetzung einen Weichmacher umfasst, bevorzugt in einer Menge von 1 bis 20 Gew.-%, bezogen auf das Gesamtgewicht der Schmelzkleberzusammensetzung, mehr bevorzugt von 1 bis 10 Gew.-%, und am meisten bevorzugt von 1 bis 7 Gew.-%.

10. Die Schmelzkleberzusammensetzung in Form von partikelförmigen Einheiten gemäß einem der vorherigen Ansprüche, wobei die Schmelzkleberzusammensetzung ein druckempfindlicher Schmelzklebstoff oder ein Schmelzklebstoff ist.

11. Die Schmelzkleberzusammensetzung in Form von partikelförmigen Einheiten gemäß einem der vorherigen Ansprüche, wobei die partikelförmigen Einheiten mindestens eines von Körnchen, Blöcken, Kissen, langen Seilen oder Stäbchen beinhaltet.

12. Die Schmelzkleberzusammensetzung in Form von partikelförmigen Einheiten gemäß einem der vorherigen Ansprüche, wobei die partikelförmigen Einheiten eine Größe von 0.1 bis 20 mm aufweisen, bevorzugt von 1 bis 10 mm, mehr bevorzugt von 2 bis 8 mm, und am meisten bevorzugt von 3 bis 6 mm.

13. Verwendung von hohlen Glasmikropartikeln als Antiblockier-Zusatz für eine Schmelzkleberzusammensetzung in der Form von partikelförmigen Einheiten.

14. Ein Verfahren zur Herstellung von partikelförmigen Einheiten eines Schmelzklebers, umfassend die Schritte:
(a) Bereitstellen der partikelförmigen Einheiten einer Schmelzkleberzusammensetzung, und
(b) in Kontakt bringen der partikelförmigen Einheiten mit hohlen Glasmikropartikeln, um die Oberfläche der partikelförmigen Einheiten mindestens teilweise mit an der Oberfläche haftenden, hohlen Glasmikropartikeln zu bedecken.

15. Das Verfahren gemäß Anspruch 15, wobei die partikelförmigen Einheiten Körnchen sind, und die Körnchen von Schritt (a) gemäß einem Verfahren hergestellt werden, umfassend die Schritte:
(i) Bereitstellen von einer oder mehrerer Schmelzkleberzusammensetzungen und Mischen der Schmelzkleberzusammensetzungen, um eine homogene Schmelzkleberzusammensetzung zu formen,
(ii) Pressen der homogenen Schmelzkleberzusammensetzung durch eine Düse, die eine Reihe von Lücken in einer kreisförmigen Anordnung aufweist, um eine Reihe homogener Schmelzkleberbahnen zu formen,
(iii) weiteres Hindurchführen der besagten Schmelzkleberbahnen durch rotierende Messer in paralleler Position zu besagter Düse, und Schneiden der Schmelzkleberbahnen, um die herzustellenden Körnchen zu erhalten,
(iv) Härten der Körnchen durch Verwendung eines flüssigen Kühlmediums, das nach besagter Düse und den rotierenden Messern auf der Seite, auf der die Schmelzkleberbahnen entstehen, zirkuliert, und
(v) Transportieren der Schmelzkleberkörnchen zu einer Trockenfläche und Entfernen der Flüssigkeit durch Föhnen der erhaltenen Körnchen.

16. Ein Verfahren zum Vermeiden oder Verringern der Blockierung in einer Schmelzkleberzusammensetzung in der Form von partikelförmigen Einheiten, umfassend das in Kontakt bringen einer Schmelzkleberzusammensetzung in der Form von partikelförmigen Einheiten mit hohlen Glasmikropartikeln.

## Revendications

1. Composition thermofusible sous la forme d'unités particulaires, les unités particulaires comportant une surface qui est au moins partiellement recouverte de microparticules de verre creuses.

2. Composition thermofusible sous la forme d'unités particulaires selon la revendication 1, dans laquelle les microparticules présentent une granulométrie moyenne d₅₀ de 1 à 200 µm, de préférence de 5 à 150 µm, plus préférablement de 10 à 100 µm, et le plus préférablement de 20 à 80 µm.

3. Composition thermofusible sous la forme d'unités particulaires selon la revendication 1 ou 2, dans laquelle les microparticules présentent une masse volumique inférieure à 0,50 g/cm³, de préférence inférieure à 0,30 g/cm³, plus préférablement inférieure à 0,20 g/cm³, et le plus préférablement inférieure à 0,15 g/cm³.

4. Composition thermofusible sous la forme d'unités particulaires selon l'une quelconque des revendications précédentes, dans laquelle les microparticules sont présentes en une quantité de 0,1 à 10 % en poids, de préférence de 0,2 à 5,0 % en poids, plus préférablement de 0,3 à 1,0 % en poids, et le plus préférablement de 0,5 à 0,7 % en poids, par rapport au poids total de la composition thermofusible.

5. Composition thermofusible sous la forme d'unités particulaires selon l'une quelconque des revendications précédentes, dans laquelle les microparticules de verre creuses sont choisies parmi le dioxyde de silicium, le quartz, le verre sodocalcique, le verre de borosilicate, le verre de borosilicate sodique, et le verre de borosilicate sodocalcique, ou l'un quelconque de leurs mélanges.

6. Composition thermofusible sous la forme d'unités particulaires selon l'une quelconque des revendications précédentes, laquelle composition thermofusible comprend au moins 10 % en poids, de préférence de 10 à 90 % en poids, plus préférablement de 25 à 75 % en poids, et le plus préférablement de 30 à 50 % en poids, par rapport au poids total de la composition thermofusible, d'au moins une poly(α-oléfine) amorphe (APAO).

7. Composition thermofusible sous la forme d'unités particulaires selon la revendication 6, dans laquelle l'au moins une poly(α-oléfine) amorphe est choisie parmi les homopolymères de propylène et les copolymères de propylène avec un ou plusieurs comonomère(s) α-oléfinique(s), de préférence l'éthylène, le 1-butène, le 1-hexène et le 1-octène, de préférence l'au moins une poly(α-oléfine) amorphe est choisie dans l'ensemble constitué par un homopolymère de propylène, un copolymère de propylène/ éthylène, un copolymère de propylène/1-butène, et un terpolymère de propylène/éthylène/1-butène.

8. Composition thermofusible sous la forme d'unités particulaires selon l'une quelconque des revendications précédentes, laquelle composition thermofusible comprend en outre une résine conférant du collant, de préférence en une quantité de 5 à 75 % en poids, plus préférablement de 10 à 60 % en poids, et le plus préférablement de 15 à 50 % en poids, par rapport au poids total de la composition thermofusible.

9. Composition thermofusible sous la forme d'unités particulaires selon l'une quelconque des revendications précédentes, laquelle composition thermofusible comprend un plastifiant, de préférence en une quantité de 1 à 20 % en poids, plus préférablement de 1 à 10 % en poids, et le plus préférablement de 1 à 7 % en poids, par rapport au poids total de la composition thermofusible.

10. Composition thermofusible sous la forme d'unités particulaires selon l'une quelconque des revendications précédentes, laquelle composition thermofusible est un adhésif sensible à la pression thermofusible ou un adhésif thermofusible.

11. Composition thermofusible sous la forme d'unités particulaires selon l'une quelconque des revendications précédentes, dans laquelle les unités particulaires comprennent au moins l'un parmi les granulés, les blocs, les coussins, et les cordes ou barres allongées.

12. Composition thermofusible sous la forme d'unités particulaires selon l'une quelconque des revendications précédentes, dans laquelle les unités particulaires sont des granulés présentant une taille de 0,1 à 20 mm, de préférence de 1 à 10 mm, plus préférablement de 2 à 8 mm, et le plus préférablement de 3 à 6 mm.

13. Utilisation de microparticules de verre creuses en tant qu'additif antiblocage pour une composition thermofusible sous la forme d'unités particulaires.

14. Procédé pour préparer des unités particulaires d'une matière thermofusible, comprenant les étapes :
(a) de se procurer des unités particulaires d'une composition thermofusible, et
(b) de mettre les unités particulaires en contact avec des microparticules de verre creuses, pour couvrir au moins partiellement la surface des unités particulaires avec des microparticules de verre creuses adhérant à la surface.

15. Procédé selon la revendication 15, dans lequel les unités particulaires sont des granulés, les granulés de l'étape (a) étant préparés par un procédé comprenant les étapes
(i) de se procurer un ou plusieurs composants thermofusibles et mélanger les composants thermofusibles pour former une composition thermofusible homogène,
(ii) de forcer la composition thermofusible homogène à travers une filière ayant une série de vides selon un motif circulaire pour former une série de rubans thermofusibles homogènes,
(iii) de forcer encore lesdits rubans thermofusibles homogènes au-delà de lames en rotation en position parallèle à ladite filière, et découper les rubans thermofusibles pour former des granulés résultants,
(iv) de solidifier les granulés en utilisant un caloporteur liquide qui circule au-delà de ladite filière et des lames rotatives du côté où les rubans thermofusibles émergent, et
(v) de transporter les granulés thermofusibles vers une zone de séchage et éliminer le liquide en soufflant sur les granulés obtenus.

16. Procédé pour prévenir ou réduire le blocage d'une composition thermofusible sous la forme d'unités particulaires, comprenant la mise en contact d'uné composition thermofusible sous la forme d'unités particulaires avec des microparticules de verre creuses.
